Europäisches Patentamt

European Patent Office

Office européen des brevets

(11) Publication number: **0 307 834 B1**

# EUROPEAN PATENT SPECIFICATION

(45) Date of publication of patent specification: **17.03.93**  (51) Int. Cl.⁵: **G05B 19/407**

(21) Application number: **88114849.8**

(22) Date of filing: **10.09.88**

(54) **Positioning control system.**

(30) Priority: **15.09.87 JP 230056/87**
**24.03.88 JP 68283/88**

(43) Date of publication of application:
**22.03.89 Bulletin 89/12**

(45) Publication of the grant of the patent:
**17.03.93 Bulletin 93/11**

(84) Designated Contracting States:
**DE FR GB IT SE**

(56) References cited:
**EP-A- 0 066 673**
**EP-A- 0 135 754**
**EP-A- 0 212 628**
**GB-A- 2 154 764**

(73) Proprietor: **KABUSHIKI KAISHA SG**
**25-11, Minamimachi 3-chome**
**Kokubunji-shi Tokyo-to(JP)**

(72) Inventor: **Yuasa, Yasuhiro**
**Tamagawadohri-Juutaku 2-721 19-1,**
**Koremasa 5-chome**
**Fuchu-shi Tokyo-to(JP)**
Inventor: **Yamashita, Akira**
**2196-345, Hirai Hinodemachi**
**Nishitama-gun Tokyo-to(JP)**

(74) Representative: **Dallmeyer, Georg et al**
**Patentanwälte von Kreisler Selting Werner**
**Deichmannhaus am Hauptbahnhof**
**W-5000 Köln 1 (DE)**

Rank Xerox (UK) Business Services
(3. 10/3.5x/3.0. 1)

## Description

This invention relates to a positioning control system for use in positioning control of power devices such as an electric motor and a hydraulic cylinder and, more particularly, to a positioning control system performing a positioning control in an open loop and, still more particularly, to a positioning control system performing a positioning control in which a lead angle is compensated in accordance with an overrun compensation amount determined on the basis of an amount of sliding during braking.

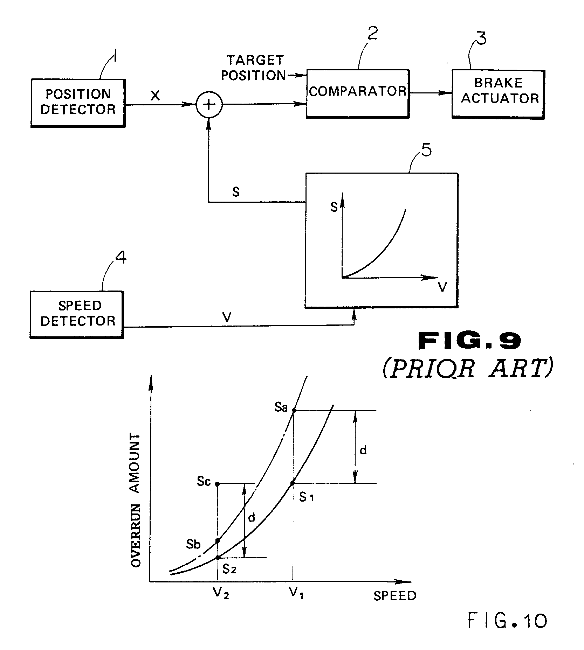

A prior art example of a device (EP-A-0135754) performing a positioning control in an open loop by employing a braking system such as a brake is shown in Fig. 9. A position of an object of control is detected by a position detector 1 and the position detection data is compared with a set value of a target position by a comparator 2 to provide a signal for controlling an actuator 3 such as a brake in accordance with a target position. In this case, speed of the object is detected by a speed detector 4, overrun compensation amount data is computed by an overrun compensation amount operation circuit 5 in accordance with the detected speed and the position detection data or target position data is corrected in accordance with this overrun compensation amount data. More specifically, the overrun compensation amount operation circuit 5 can produce a function of an expected value of a brake overrun amount relative to the speed (since this is a prepared value, this value is hereinafter referred to as "preparatory learning value") by storing or calculating such value and provide a preparatory learning value of brake overrun amount in this function as overrun compensation amount data s in accordance with the detected speed v. Current position data of the object is advanced in appearance by this overrun compensation amount s by adding the overrun compensation amount data s to position data x detected by the position detector 1 (or subtracting this data s from the target position data). Brake is thereby applied early by this overrun compensation amount data s and if, ideally, actual brake overrun amount is equal to the sliding compensation amount s, the object can be stopped accurately at the target position.

Such preparatory learning function however is generally not sufficient for securing a sufficient accuracy and, for securing such accuracy, the applicant has already proposed an open loop control system having a learning function which may be called a review function. According to this review function, an error between the actual stop position in the preceding positioning operation and the target position is stored and a further compensation operation is made by using this error as a review value in next positioning control.

An example of a positioning control device having such preparatory learning and review functions is disclosed in US-A-4,651,073 and EP-A-0135754.

In the above described positioning control device, it is possible to select one of functions of preparatory learning value manually in accordance with operation condition of the machine or the like. Once a function has been selected, however, the selected function only is always used and it cannot be changed automatically. Such function of preparatory learning value generally has a function of second order or multiple order as shown in Fig. 10.

Fig. 10 shoes an example of a selected preparatory learning function by a solid curve and an example of a function of actual speed-brake overrun amount by a chain and dot line. Such relatively large difference between the manually selected preparatory learning function curve and the actual speed-brake overrun amount curve frequently occurs. If the speed does not vary greatly, such difference in the expected value can be compensated relatively easily by the above described review function. If, however, the speed has dropped sharply due to abrupt change in the load condition in the mechanical system in the object or other reason, the difference can no longer be compensated by the above described review function.

Let us assume a simple example for convenience of explanation. At speed V1, S1 is used as the preparatory learning value (overrun compensation amount) and actual sliding amount is Sa so that data corresponding to difference d between S1 and Sa is the amount of compensation as a review value. If the speed at which brake is applied in each positioning is substantially in the vicinity of the same V1, the compensation by the review value d brings about a good result. Even if the speed varies, the review value can follow a gradual change in the speed so that no serious problem occurs. If, however, the speed drops sharply from V1 to V2, the preparatory learning value is S2 and the review value is d which is the same as in the preceding time. Accordingly, compensation is made on the assumption that Sc which is sum of S2 and d is the overrun amount while actual overrun amount is only Sb and, as a result, a relatively large error is produced. One reason for such large error is difference in inclination between the preparatory learning function curve and the actual speed-brake overrun amount curve. The fact that these curves are second order or multiple order functions further increases such error. In short, the higher the speed, the larger is the gap between the two curves.

In the open loop positioning control, whether or not an acutal stop position coincides with a target position within a predetermined permissible positive and negative error range (this permissible error range will hereinafter be referred to as "coincidence width") is checked and, if the actual stop position is within the predetermined coincidence width concerning the target position, it is judged that correct positioning at the target position has been achieved. If the actual stop position is not within the coincidence width concerning the target position, positioning is inaccurate so that the positioning control is once stopped and a proper step such as retrial of positioning must be taken. If the above described preparatory learning control and review control are performed, such inaccuracy in positioning will seldom take place. Even in such control, a positioning actuator (e.g., fluid pressure cylinder such as a pneumatic cylinder) may suddenly be actuated by an accidental external force due to some factor, e.g., vibration characteristics of the mechanical system, immediately after generation of a brake signal and immediately before stopping with a result that the actual stop position comes ouside of the coincidence width. Particularly in the case of a sequential positioning control in which positioning is made sequentially with respect to target positions of plural steps, deviation from the coincidence width not only brings about inconvenience due to inaccurate positioning in a particular step in which such deviation has occurred but also has adverse effects on positioning in next step so that the sequence control must be stopped and the machine must be stopped. Particularly, in a process in which work is done by a tact movement of positioning control systems such as an automobile manufacturing line, deviation in one positioning obliges stoppage of the entire tact so that it reduces efficiency of the work.

It is, therefore, an object of the invention to provide a positioning control system capable of performing an accurate positioning control by considering result of past positioning control (i.e., reviewing) and always automatically selecting an optimum function as the preparatory learning function, i.e., the function of speed-overrun compensation amount, without fixing the preparatory learning function.

It is another object of the invention to provide a positioning control system which, in an open loop positioning control, capable of preventing occurrence of inaccuracy in the positioning due to unexpeced movement of an object of positioning immediately before stopping caused by external vibration or the like reason.

The positioning control system according to the invention comprises

a positioning control system comprising:

- position detection means detecting a position of an object;
- speed detection means detecting speed of the object;
- overrun compensation amount data generation means generating compensation data of overrun compensation amount determined in correspondence to the speed detected by said speed detection means;
- compensation means correcting at least one of position data detected by said position detection means and target position data with the overrun compensation amount data generated by said compensation data generation means;
- control means generating a brake signal on the basis of comparison of the position data and the target position data which have bean subjected to correction by said compensation means and controlling to stop the object by using this brake signal; in which
- an overrun amount detection means detects an amount of overrun of the object from generation of the brake signal till actual stopping of the object; and
- a function selection means generates a selection signal for automatically selecting an optimum function among a plurality of functions stored in said overrun compensation amount data generation means in accordance with the actual overrun amount detected by said overrun amount detection means and the speed detected by said speed detection means during generation of the brake signal and imparting this selection signal to said overrun compensation amount data generation means.

The positioning control system according to the invention further comprises correction means for obtaining an error between the actual stop position of the objection and the target position and correcting at least one of position data detected by the position detection means and target position data in accordance with this error.

For prevention inaccuracy in positioning due to unexpected movement of the object of positioning immediately before stopping caused by external vibration or the like, it is a feature of the invention to comprise judging means for judging whether or not the actual stop position coincides with the target position within a predetermined permissible error range when the object of positioning has stopped and inching control means responsive to result of judgement of the judging means for inching the object when there in no coincidence thereby to cause the position of the object to coincide with the target position within the predetermined permissible error range.

It is another feature of the invention to comprise, as a means for preventing inaccuracy in positioning due to unexpected movement of the object immediately before stopping caused by external vibration or the like, dummy stop control means for temporarily stopping the object at a dummy target position before the target position thereby to stop the object temporarily at the dummy target position and thereafter position the object at the true target position.

The compensation amount data generation means prepares a plurality of functions of speed overrun compensation amount, selects one of these functions in response to an input selection signal and generates data of overrun compensation amount determined in correspondence to the speed detected by the speed detection means in the selected function. The compensation means corrects at least one of position data detected by the position detection means and target position data by the overrun compensation amount data generated by the overrun compensation amount data generation means. The control means generates a brake signal on the basis of comparison between the position data and target position data which have been subjected to the correction by the compensation means thereby to apply brake to the object of positioning.

Characteristic features of the invention are that the positioning control system comprises the overrun amount detection means and the function selection means and that the function used in the overrun compensation amount data generation means is automatically selected in accordance with the output of this function selection means. The overrun amount detection means detects overrun amount of the object from generation of the brake signal till actual stopping of the object. The function selection means generates a selection signal for selecting an optimum function in accordance with the actual overrun amount detected by the overrun amount detection means and the speed detected by the speed detection means at the time of generation of the brake signal and imparts the selection signal to the compensation amount data generation means.

The selection of an optimum function can be achieved in accordance, for example, with actual overrun amount detected by the overrun amount detection means and respective overrun compensation amounts in respective functions corresponding to the speeds detected by the speed detection means at the time of generation of the brake signal. In a typical example, the actual overrun amount when the positioning control is made is sequentially compared with the respective overrun compensation amounts in the respective functions corresponding to the speeds during the positioning control to detect a overrun compensation amount closest to the actual overrun amount and the function corresponding to this overrun compensation amount is selected as the optimum function.

Thus, an optimum speed-overrun compensation amount function which is the closest to the actual speed - overrun amount characteristics in the past (i.e., immediately preceding) positioning control is always automatically selected and this selected function is used for the positioning control. In this manner, the optimum one among plural speed-overrun compensation amount functions prepared as preparatory learning values is always automatically selected by considering result of past (i.e., immediately preceding) positioning control, i.e., by reviewing the past positioning control.

By virtue of the above described selective use of an optimum speed overrun compensation amount function, difference between the overrun compensation amount and the actual overrun amount is reduced so that a positioning control can be realized with little error.

Therefore, according to this invention, an excellent positioning control can be expected without the reviewing function of obtaining an error between the actual stop position and the target position of the object in the past (i.e., preceding) positioning control and performing compensation of position data or target position data in accordance with this error. If, however, such reviewing function is provided, an even more excellent positioning control can be expected.

For such reviewing function, correction means is further provided. This correction means obtains an error between the actual stop position and target position of the object, corrects further at least one of the position data detected by the position detection means and the target position data in accordance with this error and performs compensation so as to rem ove this error.

In this invention, as described above, the overrun compensation amount becomes little different from the actual overrun amount by virtue of the selective use of an optimum speed-overrun compensation amount function and, accordingly, an error between the actual stop position and the target position does not became so large at any speed so that the value of compensation for correction due to the reviewing function does not become so large even at a high speed. Accordingly, even if the speed of the object changes (drops) abruptly, there does not occur the problem in the prior art device that a large compensation value produced by the reviewing function brings about an error.

Further, according to the invention, when the object of positioning has stopped, the judging means judges whether or not the actual stop position of the object coincides with the target position within a permissible error range (coincidence width). If, for example, external vibration is applied to the object of positioning immediately after generation of the brake signal and immediately before stopping of the object thereby causing the object to perform unexpected movement, positioning becomes inaccurate and the actual stop position comes outside of the permissible error range (coincidence width) of the target position. In this case, the judging means judges that the actual stop position is outside of the permissible error range (coincidence width) of the target position. In accordance with this non-coincidence judgement, the inching control means causes the object to inch and thereby corrects the position of the object to coincide with the target position within the permissible error range.

Thus, according to the invention, even if the actual stop position should be deviated from the permissible error range of the target position, the positioning control is not stopped but the inching control is made so that the actual stop position will come within the permissible error range (coincidence width) of the target position. The inconvenience such as interruption of tact control therefore can be eliminated.

Further, according to the invention, if the dummy stop control means is provided, the object of positioning is temporarily stopped at a dummy target position before the target position and, after stopping the object temporarily at the dummy target position, the object is positioned at the true target position. In other words, the positioning control in open loop is conducted twice successively (i.e. , positioning with respect to the dummy target position and positioning with respect to the true target position). By this arrangement, even if the object performs unexpected movement due to external vibration transmitted to the object immediately before stopping thereof, inaccuracy in positioning is absorbed by the positioning to the dummy target position whereby the positioning to the true target position can ultimately be made accurate.

An embodiment of the invention will now be described with reference to the accompanying drawings.

In the accompanying drawings,
Fig. 1 is a block diagram showing an embodiment of the positioning control system according to the invention;
Fig. 2 is a flow chart showing an example of processing executed in a preparatory learning pattern selection section in Fig. 1;
Fig. 3 is a black diagram showing a register staring a selected pattern number contained in the preparatory learning pattern selection seation in Fig. 1;

Fig. 4 is a block diagram showing an example of a review correction operation section 16 in Fig. 1;
Fig. 5 is a block diagram showing an example of an inching control device which can be added to the positioning control system in Fig. 1;
Fig. 6 is a block diagram showing a modified example of the inching control device of Fig. 5;
Fig. 7 is a block diagram showing an example of a dummy stop control device which can be added to the positioning device shown in Fig. 1;
Fig. 8 is a block diagram schematically showing an example of another positioning control system to which the inching control device or dummy stop control device as shown in Figs. 5 through 7 can be applied;
Fig. 9 is a block diagram showing an example of the prior art device; and
Fig. 10 is a graph for explaining about the problem in the prior art device.

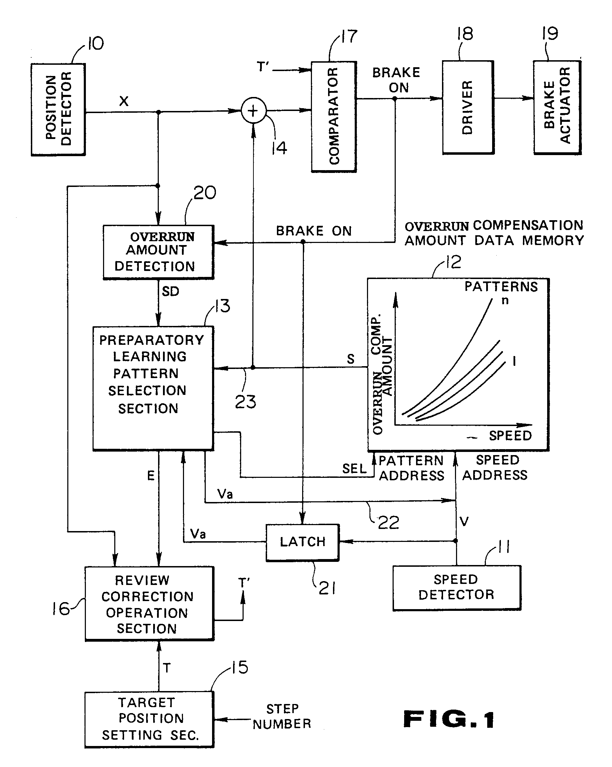

Referring to Fig. 1, a position detector 10 detects a current position of an object of positioning control and thereupon produces digital position data X representing the current position. If the object is a rotating device such as a motor, a rotary type position detector is used whereas if the object is a linearly displacing device such as a pneumatic or hydraulic cylinder, a linear type position detector is used. A pnumatic cylinder having a brake is a simple type linear actuator suitable for an open loop control. In the case that the object of control is such linear actuator, the position detector 10 detects a pistion rod position.

A speed detector 11 detects speed of the object of control and thereupon produces digital speed data V corresponding to the detected speed. As the speed detector 11, an independent detector such as a tachometer may be used. Alternatively, the speed detector 11 may be means for calculating the speed on the basis of change in the position data X.

An overrun compensation amount data memory 12 constitutes sliding compensation amount data generation means and consists, e.g., of read-only memory (ROM) prestoring a table of speed overrun compensation amount functions. The n speed-overrun compensation amount functions (i`e., preparatory learning functions) stared in this memory 12 are hereinafter referred to as preparatory learning patterns 1 - n. One of the n preparatory learning patterns 1 - n is selected in response to a pattern selection signal SEL provided by a preparatory learning pattern selection section 13 and data S of overrun compensation amount corresponding to the speed data V provided by the speed detector 11 is read out in the selected pattern.

The overrun compensation amount data S read from the overrun compensation amount data memory 12 is supplied to an adder 14 and added to the positian data X. The current positian data X of the object thereby is corrected in accordance with the overrun compensation data S. This adder 14 constitutes compensation means.

A target position setting section 15 sets data designating a target position at which the object is to stop. Since the object is so arranged that it can be stopped in plural steps, different target positions can be set for the respective steps. Upon supply of step number data designating a step at which the object is to stop from a higher order device or manually, target position data T set for this step number is provided.

This target position data T is corrected suitably in a review correction operation section 16 and corrected target position data T' is applied to a comparator 17. This comparator 17 receives at another input thereof an output of the adder 14. The comparator 17 compares the target position data T' with the overrun compensated position data X + S and, when they coincide with each other, produces a brake signal. This brake signal is, for example, a brake ON signal designating application of brake to a brake actuatar 19. The output of the comparator 17 is supplied to a driver device 18 for driving the brake actuatar 19. The output of the comparator 17 is also supplied to a overrun amount detection circuit 20 and a latch circuit 21.

The overrun amount detection circuit 20 detects overrun amount of the object from generation of the brake signal till actual stop of the object. This circuit 20 temporarily stores position data X available when brake is applied by the brake ON signal and obtains actual overrun amount SD by operating difference between the position at the time of starting of brake and the position at the time of stop.

The latch circuit 21 latches the speed data V in response to the brake ON signal and thereby stores speed Va of the object at the time when brake is applied.

A preparatory learning selection section 13 constitutes function selection means. This section 13 generates a pattern selection signal SEL which selects an optimum pattern from among the preparatory learning patterns 1 - n in the memory 12 in accordance with the actual overrun amount SD detected by the overrun amount deteation circuit 20 and the speed Va at the time of generation of the brake ON signal latched by the latch circuit 21.

In a typical example, the selection of an optimum pattern can be made in accordance with actual overrun amount SD and overrun compensation amounts Sal - San in the respective preparatory learning patterns 1 - n corresponding to the speed Va at the time of application of brake. More specifically, the actual overrun amounts SD is sequentially compared with the sliding compensation amounts Sal - San in the prespective patterns 1 - n to detect a overrun compensation amount which is closest to the actual overrun amount SD and a pattern corresponding to this overrun compensation amount is selected as the optimum pattern.

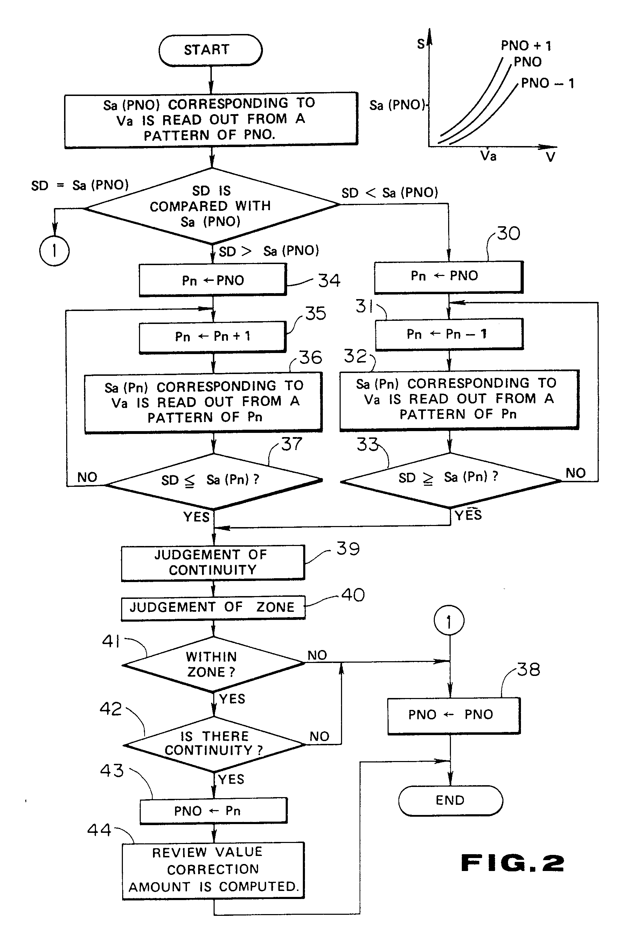

An example of routine of a pattern selection processing and other processings executed in this preparatory learning pattern selection section 13 is shown in Fig. 2.

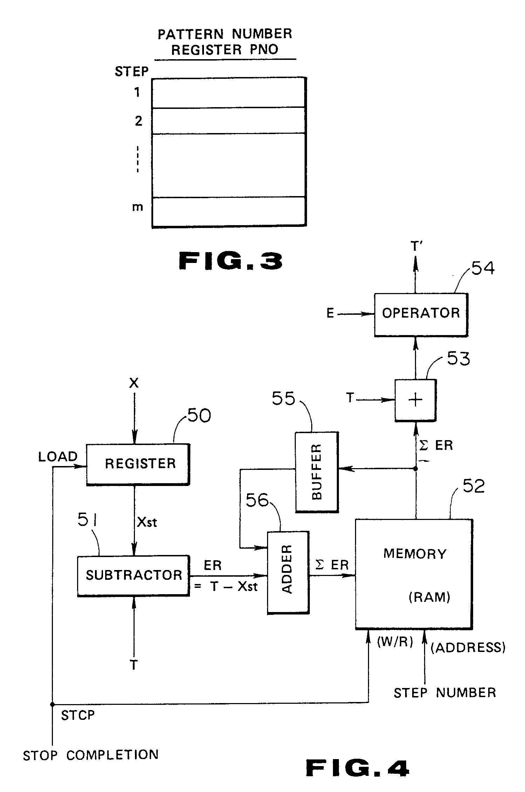

The preparatory learning pattern selection section 13 comprises, as shown in Fig. 3, registers PNO each storing a selected pattern number far each of steps 1 - m corresponding to plural target positions. A register PNO corresponding to one step designated by the step number data becomes an object of reading and writing in the processing in Fig. 2. During the positioning operation, the pattern number stared in the register PNO corresponding to the one step designated by the step number is read out and supplied as the pattern selection signal SEL to the overrun compensation amount data memory 12.

The processing of Fig. 2 starts when the stop positioning has been completed and the actual overrun amount SD has been obtained. First, the pattern number stored in the register PNO is produced as the pattern selection signal SEL and supplied to a pattern address input of the memory 12 to select the pattern used in this positioning. The speed data Va of the latch circuit 12 is supplied to the speed address input of the memory 12 through a line 22 (Fig. 1) to cause overrun compensation amount Sa(PNO) corresponding to the speed Va in the selected pattern (PNO) to be read out and supplied to the preparatory learning selection section 13 through a line 23 (Fig. 1).

Nextly, the current overrun amount SD is compared with the sliding compensatian amount Sa(PNO) supplied through the line 23 to examine whether or not the condition SD < Sa(PNO) or SD > Sa(PNO) or SD = Sa(PNO) is satisfied.

If the condition SD < Sa(PNO) is satisfied, the contents of the register PNO are set in a register Pn (black 30) and then the contents of Pn are reduced by 1 (block 31) to select a pattern whose value of overrun amount is one rank lower. This operation is made for lowering the rank of the pattern by one rank for searching for a compensation amount which is closer to the actual overrun amount SD since the actual overrun amount SD is smaller than the currently used overrun compensation amount Sa(PNO). The pattern number stored in the register Pn is provided as the pattern selection signal SEL and supplied to pattern address input of the memory 12 to select a pattern which is one rank below. Further, the speed data Va of the latch circuit 21 is applied to speed address input of the memory 12 through the line 22 (Fig. 1) to read out overrun compensation amount Sa(Pn) corresponding to the speed Va in the selected pattern (Pn) and supply it to the preparatory learning pattern selection section 13 through the line 23 (Fig. 1) (block 32). Then, whether the condition SD ≧ Sa(Pn) has been satisfied or not is examined (block 33). If this condition has not been satisfied, the processing returns to black 31 in which the contents of the register Pn are reduced by 1 to select a pattern of further one rank below and the same processing as described above is repeated. The pattern number of the register Pn when the condition SD ≧ Sa(Pn) has been satisfied represents a pattern corresponding to a overrun compensation amount which is the closest to the overrun amount SD, i.e., the optimum pattern.

When the condition Sd > Sa(PNO) is satisfied, processings of blocks 34 - 37 are executed. The processings of blocks 34 - 37 are similar to the above described processings of blocks 30 - 33 except that the contents of the register Pn are increased by 1 in block 35 and that processing in block 37 is to examine whether or not the condition SD ≦ Sa(Pn) has been satisfied. In sum, in the case of SD > Sa(PNO), the actual overrun amount SD is larger than the currently used overrun compensation amount Sa(PNO) so that the pattern is raised by one rank each time for searching for a overrun compensation amount which is closer to the actual overrun amount SD. In this case, the pattern number of the register Pn when the condition SD ≦ Sa(Pn) has been satisfied represents a pattern corresponding to a overrun compensation amount which is the closest to the overrun amount SD, i.e., the optimum pattern.

In the case of SD = Sa(PNO), the currently used pattern is the optimum pattern so that there is no need for changing the pattern. The processing therefore proceeds to black 38 where contents of the register PNO are maintained as they are.

When the condition SD ≧ Sa(Pn) or SD ≦ Sa(Pn) has been satisfied, the processing proceeds to block 43 through processings of blocks 39 - 42 and, in block 43, the pattern number of the register Pn is stored in the register PNO. By this processing, the pattern to be used in next positioning control concerning this step number is changed. In other words, the optimum pattern which has automatically been selected by the above described processings is used in next positioning control.

Judging of continuity in block 39 is made for imparting hysteresis to the change in the pattern. In this processing, the number of times the condition for changing the pattern has been established is counted. Whether or not the condition far changing the pattern has been established a predetermined number of times is judged in block 42. The processing then proceeds to block 43 where the contents of the register PNO are changed.

Zone judgement in block 40 is made to judge whether or not difference between SD and Sa(Pn) when SD ≧ Sa(Pn) or SD ≦ Sa(Pn) has been satisfied is within a predetermined insensitive zone. If this difference is within the insensitive zone, it is assumed that one of the pattern changing conditions has been satisfied.

The above described processings in blocks 39 - 42 are not essential but may be suitably changed or omitted.

In block 44, a review value correction amount is computed. In a case where a pattern to be selected is to be changed, necessity arises for correcting a review value used in a correction operation in the review correction operation section 16 (Fig. 1) by an amount corresponding to the change of the pattern so that a review value correction amount is computed. For this purpose, for example, difference E between overrun compensation amount Sa(PNO) corresponding to the speed Va in a pattern before change and overrun compensation amount Sa(Pn) corresponding to the speed Va in a new pattern after change is computed and this value is supplied as the review value correction amount to the review correction operation section 16 (Fig. 1).

Reverting to Fig. 1, the review correction operation section 16 computes an error between the actual stop position of the object and the target position and corrects at least one of the position data X detected by the position detector 10 and target position data T in accordance with this error. This review correction operation section 16 has the position data X, target position data T and the review value correction amount E applied thereto. Basically, an error $ER = T - Xst$ which is an error between the target position T and actual stop position Xst at the time of completion of stopping is computed and this error ER is accumulated at each positioning (since ER has a positive or negative sign, addition or subtraction according to this sign is performed), and accumulated error $\Sigma ER$ is computed as the review value. Then, the target position data T is corrected by this review value $\Sigma ER$ and is provided as corrected target position data $T' = T + \Sigma ER$. By this arrangement, a compensation (i.e., compensation by the review compensation) by which the error ER between the target position T and the actual stop position Xst at the time of completion of stopping is eliminated in accordance with this error can be effected. The accumulated error $\Sigma ER$ which is the review value becomes different in its weight when the pattern of the review function has been changed. Therefore, when the pattern of the review function has been changed, the review value correction amount E is generated as described above and the target position data T' = T + ΣER is further corrected (added or subtracted) by this review value correction amount E.

An example of the review correction operation section 16 is shown in Fig. 4. A register 50 holds data of actual stop position Xst by loading of the position data X in response to a stop completion detection signal STCP. A subtractor 51 computes an error ER by subtracting the stop position Xst from the target position T. A memory 52 consisting of a read and write memory such as a RAM stores accumulated error ΣER at each step of the sequence. Step number data designating a step for positioning is applied to an address input thereof and the stop completion detection signal STCP is applied to a read and write control input thereof. The memory 52 is in a readout mode before completion of stopping and is in a write mode after completion of stopping.

When positioning of a certain step is made, accumulated error ΣER up to the preceding positioning concerning this step is read from the memory 52. This accumulated error ΣER is applied to an adder 53 and added to the target position T to obtain corrected target position data T'. In an operator 54, this data T' is corrected by the review value correction amount E. The accumulated error ΣER is held also by a buffer register 55. Upon generation of the stop completion detection signal STCP, the accumulated error up to the immediately preceding positioning which is provided by the buffer register 55 and the current error ER provided by the subtractor 51 are added together by an adder 56 and an accumulated error ΣER up to positioning of this time is obtained and this value is stared in the memory 52.

Thus, in the given case, the compensation operation by the preparatory learning function is performed against the position data X in the adder 14 whereas the compensation operation (correction operation) by the review function is performed against the target position data T in the review correction operation section 16. The manner of compensation operation however is not limited to this but a compensation operation corresponding to the overrun compensation amount S may be performed against the target position data T or against both the position data X and the target position data T or, alternatively, a compensation operation corresponding to the review value ΣER may be performed against the position data X or against bath the position data X and the target position data T. It will be understood that since, in the case of the present embodiment, it is when the condition X + S = T' (where T' = T + ΣER + E) is satisfied that the condition of the comparator 17 is satisfied, the same condition of the camparatar 17 is satisfied by modifying this equation in the following manner:

$$X = T' - S$$

$$X + S/2 = T' - S/2$$

$$X + S/3 = T' - 2S/3$$

$$\vdots$$

$$X + S - \Sigma ER - E = T$$

$$X - \Sigma ER - E = T - S$$

$$\vdots$$

Accordingly, it will be readily understood that the compensation operation circuit may be constructed in various manners so as to execute one of the above listed modified equations.

The completion of positioning of the stop position is achieved by detecting completion of positioning on a suitable condition such as reduction of the speed of the object of control to zero and lapse of a predetermined period of time after generation of the brake ON signal.

In the foregoing description, different function patterns are selected for respective steps (i.e., respective target positions). Alternatively, a common function pattern may be employed for the respective steps.

The independent variable in the speed-overrun compensation amount function is not limited to speed but acceleration or other element may be taken into consideration. The overrun compensation amount generation means is not limited to a ROM but it may be a RAM or a device capable of obtaining a function by arithmetic operation.

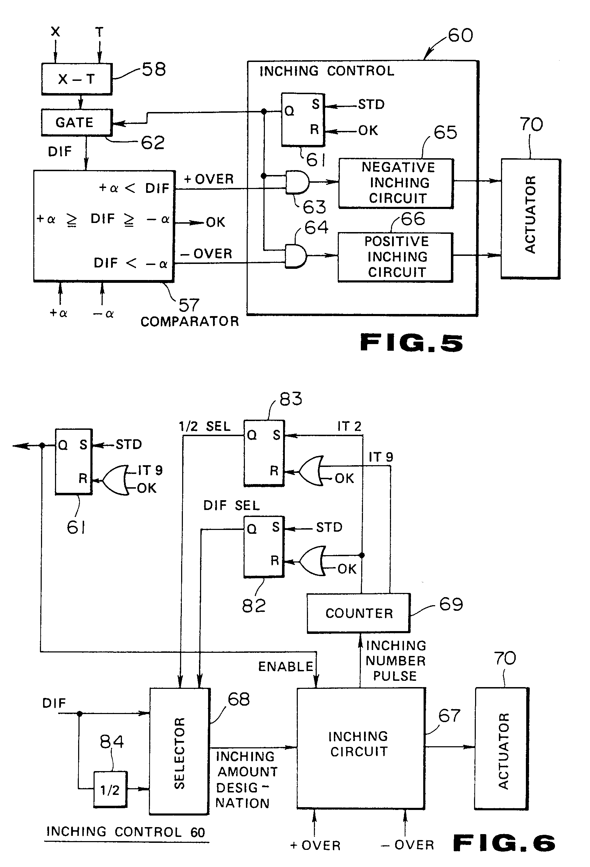

In the positioning control device as shown in Fig. 1, it is possible to add a control section including an inching control device 60 as shown in Fig. 5.

In Fig. 5, a comparator 57 and a subtractor 58 are provided for judgeing whether or not the actual stop position coincides with the target position T within a predetermined permissible error range, i.e., coincidence width when the object of control has stopped. A flip-flop 61 is set by a stop detection signal STD, a gate 62 is enabled by a set output of the flip-flop 61 and the output of the subtractor 58 is applied to the comparator 57. In the subtractor 58, difference DIF is obtained by subtracting data of the target position T from the position data X of the object. Therefore, the difference DIF between the actual stop position and the target position T when the object of positioning has stopped is applied to the comparator 57 through the gate 62. The comparator 57 compares the difference DIF with permissible error data $+ \alpha$, $- \alpha$ setting the coincidence width and examines whether or not the condition $+ \alpha \geqq \mathrm{DIF} \geqq - \alpha$ is satisfied, i.e., the actual stop position coincides with the target position T within the permissible error range. If coincidence exists, an OK signal is produced. If there is no coincidence, a signal $+$ OVER is produced when $+\alpha < \mathrm{DIF}$ and a signal $-$ OVER is produced when $\mathrm{DIF} < - \alpha$.

In accordance with result of the comparison by the comparator 57, the inching control device 60 causes the object to move in inching movement when there is no coincidence to correct the position of the object to coincide with the target position T within the permissible error range. The set output of the flip-flop 61 is applied as an inching mode signal to AND gates 63 and 64. The AND gates 63 and 64 are gated out in the inching mode to supply the signals $+$ OVER and $-$ OVER respectively to a negative inching circuit 65 and a positive inching circuit 66. The negative inching circuit 65 moves an actuator 70 (e.g., pneumatic cylinder) for positioning the object in an inching movement in a negative direction in response to the $+$ OVER signal applied through the AND gate 63. The positive inching circuit 66 moves the actuator 70 in an inching movement in a positive direction in response to the $-$ OVER signal supplied through the AND gate 64. In the case of a pneumatic cylinder, for example, inching can be performed at a unit in the order of 0.2 - 0.5 mm.

If the actual stop position of the object does not coincide with the target position T within the predetermined coincidence width, i.e., the permissible error range, the above described inching control is performed. If there is coincidence from the beginning, the OK signal is immediately produced to reset the flip-flop 61 so that the inching mode is not brought about.

By performing the above described inching control, the actuator 70 is moved in inching movement in the direction in which the position of the object coincides with the target position T. The absolute value of the output DIF of the subtractor 58 thereby is decreased and, upon satisfaction of the condition $+ \alpha \geqq \mathrm{DIF} \geqq - \alpha$, the OK signal is produced from the comparator 57, the flip-flop 61 is reset and the inching mode thereby comes to an and.

In the foregoing manner, even if the actual stop position is deviated from the permissible error range (coincidence width) of the target position, the positioning control is not stopped at this stage but the inching control is performed until the actual stop position comes within the permissible error range (coincidence width) of the target position. Accordingly, an accurate positioning control can be always achieved in an open loop.

In the example of Fig. 5, amount of one inching movement controlled by the inching circuits 65 and 66 is not necessarily a minimum possible inching unit. Again, the amount of one inching movement may be set and modified suitably.

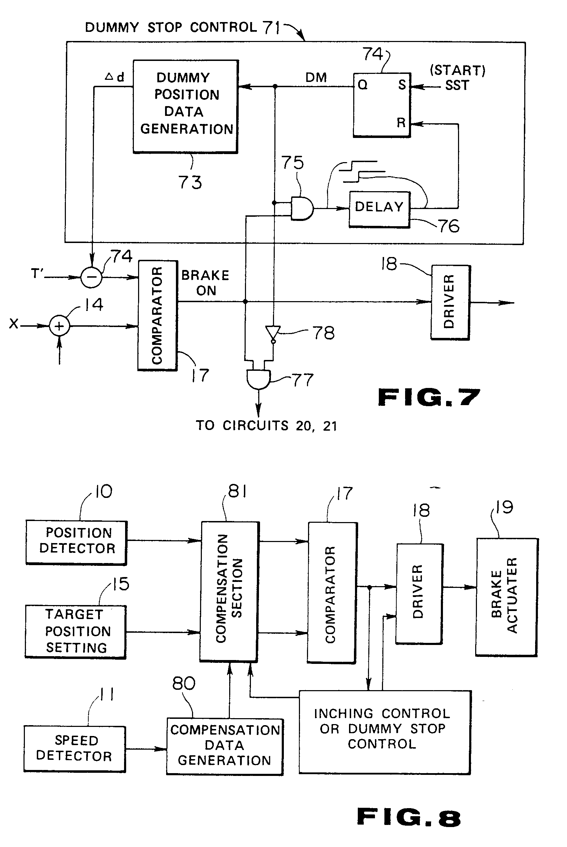

The amount of one inching movement may not necessarily be fixed but may be an amount corresponding to the difference DIF between the actual stop position and the target position. Fig. 6 shows a modified example of the inching control device 60 in which the amount of one inching movement varies with the difference DIF between the actual stop position and the target position.

In Fig. 6, an inching circuit 67 moves an actuator 70 in an inching movement in response to inching amount designation data supplied from a selector 68, using an amount corresponding to the inching amount designation data as an amount of one inching movement. The direction of inching can be controlled, in the same manner as in the above described example, by the $+$ OVER signal and $-$ OVER signal from the comparator 57 (Fig. 5). The inching circuit 67 may be enabled by an inching mode signal from a flip-flop 61.

The inching circuit 67 produces a shot of inching number pulse each time one inching movement is made. This inching number pulse is counted by a counter 69. The contents of the counter 69 are reset by rising of the stop detection signal STD and thereafter are counted up each time the inching number pulse is supplied. The counter 69 produces a 2 times inching signal IT2 when the contents of the counter 69 are "2" and a 9 times inching signal IT9 when the contents are "9".

A flip-flop 82 is set by the stop detection signal STD and reset by an OR logic output of the 2 times inching signal IT2 and the OK signal. A flip-flop 83 is set by the 2 times inching signal IT2 and reset by an OR logic output of the 9 times inching signal IT9 and the OK signal. A flip-flop 61 for the inching mode is set by an OR logic output of the 9 times inching signal IT9 and the OK signal. The selector 68 selects data of the difference DIF supplied from the gate 62 (Fig. 5) when output DIFSEL of the flip-flop 82 is "1" and selects output data of a divider 84 which is one half of the difference DIF when output 1/2SEL of the flip-flop 83 is "1". The selector 68 supplies the selected data as the inching designation data to the inching circuit 67.

Accordingly, simultaneously with introduction of the inching mode by setting of the flip-flop 61 in response to the stop detection signal STD, the flip-flop 82 is set and the output DIFSEL becomes "1" so that the difference DIF between the actual stop position and the target position is applied to the inching circuit 67. The object thereby is inched all at once by the amount corresponding to the difference DIF between the actual stop position and the target position. If the current stop position comes within the coincidence width of the target position by this one inching movement, the OK signal is produced by the comparator 57 and the inching control is completed. If the current stop position does not come within the coincidence width, one inching movement is made once again by the amount corresponding to the difference DIF between the current stop position and the target position.

If the current stop position has still not come within the coincidence width of the target position even by performing these inching movements twice, a further inching movement is performed. In this case, the 2 times inching signal IT2 is produced by the counter 69 by the inching movements of two times, the flip-flop 82 is reset, the flip-flop 83 is set, DIFSEL becomes "0" and 1/2SEL becomes "1" so that data of 1/2 of the difference DIF between the current stop position and the target position is applied as the inching amount designation data to the inching circuit 67. The object thereby is moved all at once by an amount of one half of the difference DIF between the current position and the target position. If the current position comes within the coincidence width of the target position by this third inching movement, the OK signal is produced by the comparator 57 and the inching control is completed. If the current position does not came within the coincidence width, inching by an amount which is one half of the difference DIF between the current position and the target position is further performed.

If the inching movement by an amount which is one half of the difference DIF performed seven times has still not brought the currant stop position within the coincidence width of the target position, the 9 times inching signal IT9 is produced by the counter 69 and the flip-flops 83 and 61 are thereby reset and the inching control is finished. Since this situation is abnormal, the inching control is finished so that a proper action can be taken to cope with the abnormal situation.

By varying the amount of one inching movement in accordance with the difference DIF between the current stop position and the target position without fixing it, the advantageous result that the inching control can be made quickly is obtained.

In the foregoing example, the number of times the difference DIF between the current stop position and the target position is used as the amount of one inching movement is "2" and the number of times data which is one half of the difference DIF is used as the amount of one inching movement is "7". The number of times however is not limited to these. Again, the amount of one inching movement is not limited to the difference DIF between the current stop position and the target position or one half thereof but other suitable ratio such as one quarter may be employed. If the inching amount designation data applied to the inching circuit 67 is smaller than the minimum possible inching amount (e.g., 0.2 mm) of the actuator 70, the minimum possible inching amount is used as the amount of one inching movement.

In case the construction of Fig. 5 or Fig. 6 is added, the stop completion detection signal STCP in Fig. 4 preferably is generated on the condition that the OK signal has been produced.

In the positioning control device as shown in Fig. 1, a dummy stop control device 71 as shown in Fig. 7 may be added.

In the example of Fig. 7, the dummy stop control device 71 is added between the comparator 17 and the driver device 18 of Fig. 1. The dummy stop control device 71 is provided for temporarily stopping the object of positioning at a dummy target position before a target position. In other words, in positioning the object at a desired target position, the object of positioning is temporarily stopped at a dummy target position first by the control of the dummy stop control device 71 and then the object is positioned at the true target position by a normal control route.

A subtractor 72 for dummy compensation is provided in a channel supplying target position data T' to the comparator 17 to subtract dummy position data $\Delta d$ generated by a dummy position data generation section 73 from the target position data T'. Thus, data representing a position before the true target position by the dummy position data $\Delta d$ (referred to as "dummy target position) is provided by the subtractor 72 and applied to the comparator 17.

In starting positioning processing far each step, a flip-flop 74 is set by a step start signal SST and a set output of the flip-flop 74 is applied as a dummy mode signal DM to the dummy position data generation section 73. The dummy position data generation section 73 generates predetermined dummy position data $\Delta d$ when the dummy mode signal DM is applied thereto and does not generate any data when the dummy mode signal DM is not applied thereto. Accordingly, at first, data of the dummy target position is supplied to the comparator 17 to perform a control for positioning to the dummy target position.

When position data supplied from the adder 14 coincides with the dummy target position, the brake ON signal is produced by the comparator 17. The driver device 18 is actuated by this brake ON signal to actuate the brake actuator 19 (Fig. 1).

In the meanwhile, the brake ON signal is applied also to the AND gate 75. The AND gate 75 has been enabled by the dummy mode signal DM and, therefore, the AND gate 75 produces a signal "1" when the brake ON signal concerning the dummy target position is generated. This signal "1" is delayed by a predetermined short period of time by a delay circuit 76 and its delay output is supplied to a reset input of the flip-flop 74. The flip-flop 74 thereby is reset and the dummy mode signal DM is turned to "0". The dummy stop control thereby is released.

By this construction, the brake ON signal for the dummy target position stop is generated only during a period of time corresponding to a predetermined brief period of time in the delay circuit 76 and a temporary stop control is performed in accordance with the dummy target position.

Since the dummy position data $\Delta d$ becomes "0" if the dummy mode signal DM is turned to "0", target position data T' corresponding to the target position T is directly applied to the comparator 17. Now, as in the case of Fig. 1, positioning control to the true target position can be achieved.

Thus, positioning is performed twice (i.e., positioning concerning the dummy target position and positioning concerning the true target position) in succession. By this arrangement, even if external vibration is applied to the object of positioning immediately before stop of the object, an adverse effect which might be otherwise produced is absorbed in the positioning to the first dummy target position and the positioning to the true target position can finally be performed accurately.

Difference between the dummy target position and the true target position is not so large and time length during which the brake ON signal is generated in correspondence to the dummy target position is so brief that the object is stopped at the dummy target position only momently and than smoothly comes to stop at the true target position.

The brake ON signal which is supplied to the sliding amount detection circuit 20 and the latch circuit 21 are generated in correspondence to the true target position. For this purpose, a signal obtained by inverting the dummy mode signal DM by an inverter 78 and the output of the comparator 17 are applied to an AND gate 77 and the output of this AND gate 77 is supplied to the sliding amount detection circuit 20 and the latch circuit 21 as the brake ON signal generated in correspondence to the true target position.

The dummy compensation operation may be performed against the position data X of the object instead of against the target position data. In this case, the dummy position data $\Delta d$ is added to the position data X. The dummy compensation operation may be made against both the target position data and the position data X.

The dummy position data $\Delta d$ may be different for each step instead of using common position data for the respective steps.

The dummy target position data may be provided at each step by absolute position data as in the true target position data T instead of being provided by difference $\Delta d$. In this case, data used is switched between the dummy target position data and the true target position data depending upon whether it is in the dummy mode or not.

The inching control device 60 in Fig. 5 or Fig. 6 and the dummy stop control device 71 in Fig. 7 may be applied not only to the positioning control device of Fig. 1, i.e., a positioning control device performing lead compensation by sliding compensation amount data, but also to other open loop positioning control device. Fig. 8 is an example of such positioning control device.

In Fig.8, the positioning control device comprises a position detector 10 for detecting position of the object, a speed detector 11 far detecting speed of the object, a target position setting section 15 for setting target position data, a comparator 17 for comparing the target position data With the position data, a driver device 18 and a brake actuator 19. A compensation data generation section 80 generates compensation data corresponding to the speed detected by the speed detector 11 (e.g., compensation data corresponding to expected overrun amount corresponding to the speed). A compensation section 81 corrects at least one of the position data detected by the position detector 10 and the target position data by the compensation data generated by the compensation data generation section 80.

In the above described embodiments, the brake means is not limited to a brake but other means may be employed. If, for example, a stepping motor is used as a power source, a brake is unnecessary and braking can be made by electrically locking the motor. In the open loop control of the stepping motor also, the problem of sliding as to be solved in the present invention arises and the present invention can solve this problem.

As the position detector 10, any construction may be adapted if it can detect the position of the object successively and generate the position data digitally. Such construction includes, for example, an absolute encoder, an incremental encoder and a counter for counting its output pulse and a resolver and means for obtaining digital position detection data in response to its output signal. Particularly, the rotational position detection device or linear position detection device of an inductive type (variable reluctance type) employing a phase shift system as disclosed in Japanese Preliminary Patent Publication Nos. 57-70406, 58-106691, 59-79114, Japanese Preliminary Utility Model Publication No. 58-136718 and U.S. Patent Nos. 4,754,220, 4,556,886 and 4,572,951 may be preferably employed.

The present invention may be carried out either by a hard wired logic or a software program using a microcomputer.

In detecting whether or not the actual stop position coincides with the target position within a predetermined permissible error range, i.e., coincidence width, the range of the coincidence width need not be common far all positioning steps but the coincidence width may be narrow in a step in which high accuracy of positioning is required and may be wide in a step in which accuracy of positioning may be rough.

As described above, according to the invention, the preparatory function, i.e., speed-overrun compensation amount function is not fixed but an optimum function is always automatically selected as this preparatory learning function in consideration of result of past positioning control (i.e., reviewing) so that an accurate positioning control can be performed. In other words, by the automatic selective use of such optimum speed-overrun compensation amount function, overrun compensation amount supplied as the preparatory learning value becomes little different from actual overrun amount so that positioning control can always be performed with little error.

In this invention, as described above, the overrun compensation amount can become little different from the actual overrun amount by the selective use of an optimum speed-overrun compensation amount function and, accordingly, the error between the actual stop position and the target position does not became large in any speed so that the compensation value to be corrected by the reviewing function does not become too large. Hence, even if the speed of the object varies (drops) abruptly, the problem in the prior art device that a large compensation value due to the reviewing function brings about an error does not arise so that an accurate positioning control can be achieved.

According to the invention, when the actual stop position is not within the permissible error range (coincidence width) of the target position, the positioning control is not stopped but the inching control is performed. Accordingly, even if the actual stop position is not within the permissible error range of the target position, the control can be continued until the actual stop position comes within the permissible error range of the target position and, accordingly, the inconvenience such as interruption of tact control in the machine system to be controlled can be prevented.

According to the invention, the object of positioning is temporarily stopped at a dummy target position before a target position and thereafter the object is positioned to the true target position and, accordingly, even if external vibration is applied to the object of positioning immediately before stopping thereby causing the object to perform an unexpected movement, an adverse affect which might be caused thereby is absorbed in the first positioning to the dummy target positian so that the final positioning to the true target position can be made accurately.

**Claims**

1. A positioning control system comprising:
   - position detection means (10) detecting a position (X) of an object;
   - speed detection means (11) detecting speed (V) of the object;
   - overrun compensation amount data generation means (12) generating compensation data of overrun compensation amount (S) determined in correspondence to the speed (V) detected by said speed detection means (11);
   - compensation means (16) correcting at least one of position (X) data detected by said position detection means (10) and target position (T) data with the overrun compensation amount (S) data generated by said compensation data generation means (12);
   - control means (18,19) generating a brake signal on the basis of comparison of the position (X) data and the target position (T) data which have been subjected to correction by said compensation means (16) and controlling to stop the object by using this brake signal;
   **characterised in that** it further comprises
   - an overrun amount detection means (20) detecting an amount of overrun of the object from generation of the brake signal till actual stopping of the object; and
   - a function selection means (13) generating a selection signal (SEL) for automatically selecting an optimum function among a plurality of functions stored in said overrun compensation amount data generation means (12) in accordance with the actual overrun amount (SD) detected by said overrun amount detection means (20) and the speed (V) detected by said speed detection means (11) during generation of the brake signal and for imparting this selection signal to said overrun compensation amount data generation means (12).

2. A positioning control system as defined in claim 1 wherein said function selection means (13) generates the selection signal (SEL) for selecting the optimum function by sequentially comparing respective overrun compensation amounts (S) in the plural functions corresponding to the speed (V) detected by said speed detection means (11) during generation of the brake signal with the actual overrun amount (SD) detected by said overrun amount detection means (20), by detecting a overrun compensation amount closest to the actual overrun amount and selecting the function corresponding to this overrun compensation amount as the optimum function.

3. A positioning control system as defined in claim 1 or 2, wherein said compensation amount data generation means (12) consists of a memory which stores the respective functions (I) and selects one of the functions (I) in response to the selection signal (SEL) and provides overrun compensation amount (S) data in response to the speed (V) detected by said speed detection means (11) in this selected function.

4. A positioning control system as defined in claim 1 wherein said function selection means (13) generates the selection signal (SEL) independently with respect to each of different target positions (T).

5. A positioning control system as defined in claims 1 thru 4, which further comprises correction means(16) for obtaining an error between an actual stop position and a target position (T) of the object and correcting at least one of position data (X) detected by said position detection means (10) and target position (T) data in accordance with this error, and wherein said control means (18,19) generates the brake signal on the basis of comparison of the position (X) data and the target position (T') data which have been subjected to the correction by said correction means (16) and said compensation means (12).

6. A positioning control system as defined in claim 1 or 5 which further comprises:
   judging means (57,58) for judging whether or not the actual stop position coincides with the target position within a predetermined error range when the object has stopped by the control of said control means (18,19); and

inching control means (60) responsive to result of judgement of said judging means (57,58) for inching the object when there is no coincidence between the actual stop position and the target position (T) thereby to cause the position of the object to coincide with the target position (T) within the predetermined error range.

7. A positioning control system as defined in claim 6 which further comprises inching mode setting means (61) for setting an inching mode for a period of time from stopping of the object by the control of said control means (18,19) till judgement of coincidence by said judging means (57,58) and enabling said inching control means (60) during the inching mode.

8. A positioning control system as defined in claim 1 thru 7 which further comprises dummy stop control means (71) for temporarily stopping the object at a dummy target position ($\Delta$ d) before the target position, the object being temporarily stopped at the dummy target position ($\Delta$d) and thereafter being positioned at the true target position.

9. A positioning control system as defined in claim 8 wherein said dummy stop control means (71) comprises dummy compensation means (81) which corrects at least one of the position data detected by said position detection means (10) and the target position data by predetermined dummy position data and causes said control means (17,18) to generate a brake signal to stop the object at the dummy target position on the basis of comparison (41) data which have been subjected to the correction, and dummy stop release means for releasing the correction of the position data by said dummy compensation means (81) after the object has stopped temporarily at the dummy target position ($\Delta$ d).

10. A positioning control system as defined in any one of claims 1 - 9 wherein said object comprises a positioning actuator (19) which is an actuator having a brake and brake is applied to the object by actuating the brake of said positioning actuator in response to the brake signal.

**Patentansprüche**

1. Positionssteuersystem mit:
   - einer die Position (X) eines Objekts ermittelnden Positionsermittlungseinrichtung (10);

- einer die Geschwindigkeit (V) des Objekts ermittelnden Geschwindigkeitsermittlungseinrichtung (11);
- einer Überlaufkompensationsbetragsdatenerzeugungseinrichtung (12), die Kompensationsdaten des Überlaufskompensationsbetrags (S) erzeugt, der entsprechend der von der Geschwindigkeitsermittlungseinrichtung (11) ermittelten Geschwindigkeit (V) bestimmt wurde;
- einer Kompensationseinrichtung (16), die wenigstens die von der Positionsermittlungseinrichtung (10) ermittelten Positions-(X)-Daten oder die Zielpositions-(T)-Daten durch den von der Kompensationsdatenerzeugungseinrichtung (12) erzeugten Überlaufkompensationsbetrag (S) korrigiert;
- einer Steuereinrichtung (18, 19), die ein Bremssignal auf der Basis eines Vergleichs der Positions-(X)-Daten und der Zielpositions-(T)-Daten, die einer Korrektur durch die Kompensationseinrichtung (16) unterzogen wurden, erzeugt und steuert, um das Objekt durch Verwendung dieses Bremssignals anzuhalten; dadurch gekennzeichnet, daß es ferner aufweist:
- eine Überlaufbetragsermittlungseinrichtung (20), die einen Überlaufbetrag des Objekts von der Erzeugung des Bremssignals an bis zum tatsächlichen Anhalten des Objekts erzeugt; und
- eine Funktionswähleinrichtung (13), die ein Wählsignal (SEL) zum automatischen Wählen einer optimalen Funktion aus einer Vielzahl von Funktionen erzeugt, die in der Überlaufkompensationsbetragsdatenerzeugungseinrichtung (12) entsprechend dem von der Überlaufbetragsermittlungseinrichtung (20) ermittelten gegenwärtigen Überlaufbetrag (SD) und der von der Geschwindigkeitsermittlungseinrichtung (11) während der Erzeugung des Bremssignals ermittelten Geschwindigkeit (V) gespeichert sind, und zum Liefern dieses Wählsignals an die Überlaufkompensationsbetragsdatenerzeugungseinrichtung (12).

2. Positionssteuersystem nach Anspruch 1, bei dem die Funktionswähleinrichtung (13) das Wählsignal (SEL) zum Wählen der optimalen Funktion erzeugt, indem sie jeweilige Überlaufkompensationsbeträge (S) in den mehreran Funktionen entsprechend der von der Geschwindigkeitsermittlungseinrichtung (11) während der Erzeugung des Bremssignals ermittelten Geschwindigkeit (V) sequentiell mit von der Überlaufbetragsermittlungseinrichtung (20) ermittelten gegenwärtigen Überlaufbetrag (SD) vergleicht, indem sie einen Überlaufkompensationsbetrag ermittelt, der dem gegenwärtigen Überlaufbetrag am nächsten ist, und die diesem Überlaufkompensationsbetrag entsprechende Funktion als die optimale Funktion auswählt.

3. Positionssteuersystem nach Anspruch 1 oder 2, bei dem die Überlaufkompensationsbetragsdatenerzeugungseinrichtung (12) aus einem Speicher besteht, der die jeweiligen Funktionen (I) speichert, und eine der Funktionen (I) auf das Wählsignal (SEL) hin auswählt und auf die in dieser ausgewählten Funktion von der Geschwindigkeitsermittlungseinrichtung (11) ermittelte Geschwindigkeit (V) hin Überlaufkompensationsbetrags-(S)-Daten liefert.

4. Positionssteuersystem nach Anspruch 1, bei dem die Funktionswähleinrichtung (13) das Wählsignal (SEL) unabhängig in bezug auf jede von verschiedenen Zielpositionen (T) erzeugt.

5. Positionssteuersystem nach einem der Ansprüche 1 bis 4, ferner mit einer Korrektureinrichtung (16) zum Ermitteln eines Fehlers zwischen einer gegenwärtigen Halteposition und einer Zielposition (T) des Objekts, und zum Korrigieren wenigstens der von der Positionsermittlungseinrichtung (10) ermittelten Positionsdaten (X) oder der Zielpositions-(T)-Daten entsprechend diesem Fehler, und bei dem die Steuerungseinrichtung (18, 19) das Bremssignal auf der Basis des Vergleichs der Positions-(X)-Daten und der Zielpositions-(T')-Daten, die der Korrektur durch die Korrektureinrichtung (16) und die Kompensationseinrichtung (12) unterzogen wurden, erzeugt.

6. Positionssteuersystem nach Anspruch 1 oder 5, ferner mit
- einer Beurteilungseinrichtung (57, 58) zum Beurteilen ob die gegenwärtige Halteposition mit der Zielposition innerhalb eines vorbestimmten Fehlerbereichs übereinstimmt, wenn das Objekt durch die Steuerung der Steuerungseinrichtung (18, 19) angehalten hat; und
- eine auf das Ergebnis der Beurteilung durch die Beurteilungseinrichtung (57, 58) reagierende Langsambewegungssteuerungseinrichtung (60) zum langsamen Bewegen des Objekts, wenn die gegenwärtige Halteposition nicht mit der Zielposition (T) übereinstimmt, um dadurch eine Übereinstimmung der Position des Objekts mit der Zielposition innerhalb des vorbestimmten Fehlerbereichs zu bewirken.

7. Positionssteuersystem nach Anspruch 6, ferner mit einer Langsambewegungsmodus-Einstelleinrichtung (61) zum Einstellen eines Langsambewegungsmodus für einen Zeitraum vom Anhalten des Objekts durch die Steuerung der Steuerungseinrichtung (18, 19) bis zur Beurteilung der Übereinstimmung durch die Beurteilungseinrichtung (57, 58) und zum Freigeben der Langsambewegungssteuerungseinrichtung (60) während des Langsambewegungsmodus.

8. Positionssteuersystem nach einem der Ansprüche 1 bis 7, ferner mit einer Pseudohalt-Steuerungseinrichtung (71) zum zeitweiligen Anhalten des Objekts an einer Pseudo-Zielposition ( d) vor der Zielposition, wobei das Objekt zeitweilig an der Pseudo-Zielposition ( d) angehalten und danach an der wahren Zielposition positioniert wird.

9. Positionssteuersystem nach Anspruch 8, bei dem die Pseudohalt-Steuerungseinrichtung (71) aufweist: eine Pseudokompensationseinrichtung (81), die wenigstens die von der Positionsdatenermittlungseinrichtung (10) ermittelten Positionsdaten oder die Zielpositionsdaten durch vorbestimmte Pseudo-Positionsdaten korrigiert und die Steuerungseinrichtung (17, 18) veranlaßt, ein Bremssignal zum Anhalten des Objekts an der Pseudo-Zielposition auf der Basis von Vergleichsdaten (41) zu erzeugen, die der Korrektur unterzogen wurden, und eine Pseudohalt-Freigabeeinrichtung zum Freigeben der Korrektur der Positionsdaten durch die Pseudokompensationseinrichtung (81), nachdem das Objekt zeitweilig an der Pseudo-Zielposition ( d) gehalten hat.

10. Positionssteuersystem nach einem der Ansprüche 1 bis 9, bei dem das Objekt einen Positionierungsbetätiger (19) aufweist, der ein Betätiger mit einer Bremse ist, und eine Bremswirkung auf das Objekt aufgebracht wird, indem die Bremse des Positionierungsbetätigers auf das Bremssignal hin betätigt wird.

**Revendications**

1. Système de commande de positionnement comprenant :

- un moyen de détection de position (10) détectant une position (X) d'un objet;
- un moyen de détection de vitesse (11) détectant une vitesse (V) de l'objet;
- un moyen de génération (12) de donnée de quantité de compensation de dépassement engendrant une donnée de compensation d'une quantité (S) de compensation de dépassement déterminée en correspondance avec la vitesse (V) détectée par ledit moyen de détection de vitesse (11);
- un moyen de compensation (16) corrigeant au moins l'une des données de position (X) détectées par ledit moyen de détection de position (10) et une donnée de position cible (T) à l'aide de la donnée de quantité (S) de compensation de dépassement engendrée par ledit moyen de génération (12) de donnée de compensation;
- un moyen de commande (18, 19) engendrant un signal de frein sur la base d'une comparaison de la donnée de position (X) et de la donnée de position cible (T) qui ont été soumises à correction par ledit moyen de compensation (16), et commandant d'arrêter l'objet en utilisant ce signal de frein;

    **caractérisé** en ce qu'il comprend de plus

- un moyen de détection (20) de quantité de dépassement détectant une quantité de dépassement de l'objet depuis la génération du signal de frein jusqu'à l'arrêt réel de l'objet; et
- un moyen de sélection (13) de fonction engendrant un signal de sélection (SEL) pour sélectionner automatiquement, parmi une pluralité de fonctions mémorisées dans ledit moyen de génération (12) de donnée de quantité de compensation de dépassement, une fonction optimale conforme à la quantité réelle de dépassement (SD) détectée par ledit moyen de détection (20) de quantité de dépassement et la vitesse (V) détectée par ledit moyen de détection de vitesse (11) pendant la génération du signal de frein et pour communiquer ce signal de sélection audit moyen de génération (12) de donnée de quantité de compensation de dépassement.

2. Système de commande de positionnement selon la revendication 1, dans lequel ledit moyen (13) de sélection de fonction engendre le signal de sélection (SEL) pour sélectionner la fonction optimale en comparant en séquence, avec la quantité réelle (SD) de dépassement détectée par ledit moyen de détection (20) de quantité de dépassement, des quantités respectives (S) de compensation de dépassement de la série des fonctions correspondant à la vitesse (V) détectée par ledit moyen (11) de détection de vitesse pendant la génération du signal de frein, en détectant une quantité de compensation de dépassement la plus voisine de la quantité de dépassement réelle et en sélectionnant comme fonction optimale la fonction correspondant à cette quantité de compensation de dépassement.

3. Système de commande de positionnement selon la revendication 1 ou 2, dans lequel ledit moyen de génération (12) de donnée de quantité de compensation consiste en une mémoire qui mémorise les fonctions respectives (I) et sélectionne l'une des fonctions (I) en réponse au signal de sélection (SEL) et qui envoie une donnée de quantité (S) de compensation de dépassement en réponse à la vitesse (V) détectée par ledit moyen de détection (11) de vitesse dans cette fonction sélectionnée.

4. Système de commande de positionnement selon la revendication 1, dans lequel ledit moyen (13) de sélection de fonction engendre le signal de sélection (SEL) indépendamment en ce qui concerne chacune des différentes positions cibles (T).

5. Système de commande de positionnement selon l'une des revendications 1 à 4, qui comprend en outre un moyen de correction (16) prévu pour obtenir une erreur entre une position réelle d'arrêt et une position cible (T) de l'objet et corriger conformément à cette erreur au moins l'une des données de position (X), détectée par ledit moyen de détection (10) de position, et la donnée de position cible (T), et dans lequel ledit moyen de commande (18, 19) engendre le signal de frein sur la base d'une comparaison de la donnée de position (X) et de la donnée de position cible (T') qui ont été soumises à la correction par ledit moyen de correction (16) et ledit moyen de compensation (12).

6. Système de commande de positionnement selon l'une des revendications 1 à 5,qui comprend en outre :

un moyen d'évaluation (57, 58) pour évaluer si la position réelle d'arrêt coïncide ou non avec la position cible à l'intérieur d'une plage d'erreur prédéterminée lorsque l'objet s'est arrêté sous commande dudit moyen de commande (18, 19); et

un moyen de commande (60) de mouvement très lent sensible au résultat de l'évaluation dudit moyen d'évaluation (57, 58) pour déplacer très lentement l'objet lorsqu'il n'y a pas coïncidence entre la position réelle d'arrêt et la position cible (T), en amenant ainsi la position de l'objet à coïncider, à l'intérieur de la plage d'erreur prédéterminée, avec la position cible (T).

7. Système de commande de positionnement selon la revendication 6,qui comprend en outre un moyen (61) de mise en mode de déplacement très lent pour mettre en mode de déplacement très lent pendant un laps de temps, depuis l'arrêt de l'objet sous commande dudit moyen de commande (18, 19) jusqu'à l'évaluation de coïncidence par ledit moyen d'évaluation (57, 58), et pour valider ledit moyen (60) de commande de déplacement très lent pendant le mode de déplacement très lent.

8. Système de commande de positionnement selon l'une des revendications 1 à 7,qui comprend en outre un moyen de commande (71) d'arrêt fictif prévu pour arrêter temporairement l'objet, avant la position cible, à une position fictive de cible (Δd), l'objet étant temporairement arrêté à la position cible fictive (Δd) et étant ensuite positionné à la position cible réelle.

9. Système de commande de positionnement selon la revendication 8, dans lequel ledit moyen de commande (71) d'arrêt fictif comprend un moyen de compensation (81) d'arrêt fictif qui corrige, d'une donnée de position fictive prédéterminée, l'une au moins des données de position détectée par ledit moyen de détection (10) de position et la donnée de position cible et qui amène ledit moyen de commande (17, 18) à engendrer un signal de frein pour arrêter l'objet à la position cible fictive sur la base de données de comparaison (41) qui ont été soumises à la correction, et un moyen de libération d'arrêt fictif afin de libérer la correction de la donnée de position par ledit moyen de compensation (81) d'arrêt fictif après que l'objet se soit arrêté temporairement à la position cible fictive (Δ d).

10. Système de commande de positionnement selon l'une quelconque des revendications 1 à 9, dans lequel ledit objet comprend un actionneur (19) de positionnement qui est un actionneur comportant un frein et le frein est appliqué à l'objet en actionnant, en réponse au signal de frein, le frein dudit actionneur de positionnement.

**FIG.1**

START

Sa (PNO) CORRESPONDING TO Va IS READ OUT FROM A PATTERN OF PNO.

SD = Sa (PNO)

SD IS COMPARED WITH Sa (PNO)

SD < Sa (PNO)

SD > Sa (PNO)

Pn ← PNO    34

Pn ← PNO    30

Pn ← Pn + 1    35

31    Pn ← Pn − 1

Sa (Pn) CORRESPONDING TO Va IS READ OUT FROM A PATTERN OF Pn    36

32    Sa (Pn) CORRESPONDING TO Va IS READ OUT FROM A PATTERN OF Pn

NO    SD ≤ Sa (Pn) ?    37

33    SD ≥ Sa (Pn) ?    NO

YES

YES

JUDGEMENT OF CONTINUITY    39

JUDGEMENT OF ZONE    40

41    WITHIN ZONE ?    NO

YES

42    IS THERE CONTINUITY ?    NO

YES

43    PNO ← Pn

44    REVIEW VALUE CORRECTION AMOUNT IS COMPUTED.

1

38    PNO ← PNO

END

**FIG.2**

$Sa (PNO)$

$S$

PNO + 1
PNO
PNO − 1

$Va$    $V$

PATTERN NUMBER
REGISTER PNO

STEP

1

2

---

m

## FIG.3

## FIG.4

**FIG.5**

INCHING CONTROL 60

**FIG.6**

DUMMY STOP CONTROL 71

DUMMY POSITION DATA GENERATION 73

△d

DM

74
Q  S ← (START) SST
R

75

DELAY 76

T' 74

─

14

+

X

COMPARATOR 17

BRAKE ON

78

77

TO CIRCUITS 20, 21

18

DRIVER

**FIG.7**

10
POSITION DETECTOR

15
TARGET POSITION SETTING

11
SPEED DETECTOR

80
COMPENSATION DATA GENERATION

81
COMPENSATION SECTION

17
COMPARATOR

18
DRIVER

19
BRAKE ACTUATER

INCHING CONTROL OR DUMMY STOP CONTROL

**FIG.8**

22

**FIG.9**
*(PRIOR ART)*

FIG.10

23